# EUROPÄISCHE PATENTSCHRIFT

(11) **EP 3 604 203 B1**
(45) Veröffentlichungstag und Bekanntmachung des Hinweises auf die Patenterteilung: **24.03.2021**
(21) Anmeldenummer: 19185202.9
(22) Anmeldetag: 09.07.2019
(51) Int. Cl.: B67B 7/86, B67D 1/00, B67D 1/08, B67D 1/12, B65D 75/58

(54) **VORRICHTUNG FÜR DIE HERSTELLUNG VON MISCHGETRÄNKEN AUS TRINKWASSER UND EINEM GETRÄNKEKONZENTRAT AUS EINER NACHFÜLLEINHEIT UND NACHFÜLLEINHEIT FÜR DIE BEREITSTELLUNG EINES GETRÄNKEKONZENTRATS FÜR DIE HERSTELLUNG VON MISCHGETRÄNKEN AUS TRINKWASSER UND GETRÄNKEKONZENTRAT**
DEVICE FOR PREPARING MIXED BEVERAGES FROM DRINKING WATER AND A CONCENTRATE FROM A REFILL UNIT AND REFILL UNIT FOR PROVIDING A CONCENTRATE FOR PREPARING BEVERAGES FROM DRINKING WATER AND CONCENTRATE
DISPOSITIF DE PRÉPARATION DES BOISSONS MÉLANGÉES À PARTIR DE L'EAU POTABLE ET D'UN CONCENTRÉ DE BOISSON D'UNE UNITÉ DE REMPLISSAGE ET UNITÉ DE REMPLISSAGE POUR LA FOURNITURE D'UN CONCENTRÉ DE BOISSON DESTINÉE À LA PRÉPARATION DES BOISSONS MÉLANGÉES À PARTIR DE L'EAU POTABLE ET DU CONCENTRÉ DE BOISSON

(30) Priorität: 02.08.2018 DE 202018104459 U
(43) Veröffentlichungstag der Anmeldung: 05.02.2020
(73) Patentinhaber: Deutsche Nährmittel Gesellschaft Farmland Food Service KG, 96146 Altendorf (DE)
(72) Erfinder: Von Kaphengst, Jörg, 55294 Bodenheim (DE)
(74) Vertreter: Hauck Patentanwaltspartnerschaft mbB

(56) Entgegenhaltungen:
- WO-A1-2011/084603
- WO-A2-02/26614
- WO-A2-2013/036564
- DE-A1- 3 727 972
- US-A- 4 854 721
- US-A- 4 889 148
- US-A- 5 647 511
- US-A1- 2012 104 041

## Beschreibung

Die Erfindung betrifft eine Vorrichtung für die Herstellung von Mischgetränken aus Trinkwasser und einem Getränkekonzentrat aus einer Nachfülleinheit und ein System umfassend eine Vorrichtung für die Herstellung von Mischgetränken aus Trinkwasser und einem Getränkekonzentrat aus einer Nachfülleinheit und eine Nachfülleinheit für die Bereitstellung eines Getränkekonzentrats für die Herstellung von Mischgetränken aus Trinkwasser und Getränkekonzentrat.

Vorrichtungen für die Herstellung von Mischgetränken aus Trinkwasser und einem Getränkekonzentrat (Post Mix) werden insbesondere in der Gastronomie, in Kantinen und in Autobahnraststätten eingesetzt. Das Getränkekonzentrat (z.B. für Apfelsaft oder Orangensaft) wird entweder einem Mehrweg-Druckcontainer oder einem Einweg-BIB (*bag in box*) entnommen. Trinkwasser und Getränkekonzentrat werden aufeinanderfolgend in das Trinkgefäß eingegeben und darin miteinander vermischt.

Bei den Vorrichtungen mit Mehrweg-Druckcontainern ist der logistische Aufwand hoch und die Vorrichtungen mit Einweg-BIB haben einen hohen Verpackungsaufwand. Beim Austausch der Nachfülleinheit für Getränkekonzentrat kann es zu Verunreinigungen durch Kontakt des Anwenders mit der Anschlussstelle kommen. Das Einfüllen von Trinkwasser und Getränkekonzentrat nacheinander in den Trinkbehälter verzögert die Herstellung und kann zu einer unzureichenden Vermischung führen.

Derartige Vorrichtungen, Nachfüllpackungen und Systeme sind in der US 4 854 721 A, WO 2011/084603 A1 und WO 2013/036564 A2 beschrieben.

Davon ausgehend liegt der Erfindung die Aufgabe zugrunde, eine den Aufwand für Logistik oder Verpackung mindernde und die Herstellung von Mischgetränken aus Getränkekonzentrat vereinfachende, hygienische und die Mischung fördernde Vorrichtung für die Herstellung von Mischgetränken und ein System umfassend eine Vorrichtung für die Herstellung von Mischgetränken und eine Nachfülleinheit für die Bereitstellung eines Getränkekonzentrats zur Verfügung zu stellen.

Die Aufgabe wird durch eine Vorrichtung gemäß Anspruch 1 gelöst. Vorteilhafte Ausführungsarten der Vorrichtung sind in Unteransprüchen angegeben.

Die erfindungsgemäße Vorrichtung für die Herstellung von Mischgetränken aus Trinkwasser und einem Getränkekonzentrat aus einer Nachfülleinheit mit einem Beutel aus flexiblem Flachmaterial, einer vom Beutel vorstehenden Tülle mit einer radial vorstehenden Scheibe oder mehreren radial vorstehenden Vorsprüngen an verschiedenen Umfangspositionen in einem Abstand vom Beutel, einer das obere Ende der Tülle flüssigkeitsdicht verschließenden, durchstoßbaren Abdeckung und einem im Beutel enthaltenen Fruchtsaftkonzentrat umfasst
- einen Träger mit einer Lagerfläche zum Auflegen des Beutels,
- eine bezüglich der Lagerfläche des Trägers nach oben vorstehende Anschlagplatte mit einer vom oberen Rand der Anschlagplatte ausgehend nach unten sich erstreckenden Einsetzöffnung zum Einsetzen der Tülle, sodass die Anschlagplatte am Rand der Einsetzöffnung in einen Spalt zwischen dem Beutel und der Scheibe oder den Vorsprüngen eingreift, wenn der Beutel auf dem Träger aufliegt,
- einen auf die Aufnahme ausgerichteten, einen Durchgangskanal aufweisenden Dorn auf der von der Lagerfläche abgewandten Seite der Anschlagplatte,
- eine den Dorn haltende Verlagerungseinrichtung mit einer Betätigungseinrichtung, die ausgebildet ist, den Dorn aus einer Freigabestellung in einem Abstand von der Anschlagplatte, der ein Einsetzen der Tülle in die Einsetzöffnung zulässt, in eine Eingriffsstellung zu verlagern, in der der Dorn die Abdeckung am Ende der Tülle durchsticht und in die Tülle eingreift,
- eine mit dem Durchgangskanal des Dorns verbundene erste Verbindungsleitung,
- eine in der ersten Verbindungsleitung angeordnete Pumpe,
- eine mit dem anderen Ende der ersten Verbindungsleitung verbundene Mischkammer mit einem Auslass für ein Mischgetränk
- und eine mit der Mischkammer verbundene zweite Verbindungsleitung zu einer Trinkwasserversorgung.

Die erfindungsgemäße Vorrichtung ist ausgebildet, mit einer speziellen Nachfülleinheit (*pouch*) zusammenzuarbeiten, die einen Beutel und eine Tülle für die Bereitstellung des Getränkekonzentrats aufweist. Das erfindungsgemäße System umfassend die Vorrichtung und die Nachfülleinheit ist Gegenstand von Anspruch 14 und vorteilhafte Ausführungsarten der Nachfülleinheit sind in den Ansprüchen 15 bis 18 angegeben. Vorzugsweise werden Einweg-Nachfülleinheiten verwendet. Die Nachfülleinheiten können aber auch als Mehrweg-Nachfülleinheiten benutzt werden. Der Aufwand für die Logistik und die Verpackung wird durch Verwendung von Nachfülleinheiten mit Beuteln reduziert. Das Einsetzen der Nachfülleinheit in die Vorrichtung und das Austauschen einer geleerten Nachfülleinheit gegen eine frische Nachfülleinheit ist besonders hygienisch, schnell und mit wenigen Handgriffen durchführbar. Die Hygiene wird insbesondere dadurch gewährleistet, dass der Dorn durch Verlagerungseinrichtung und Betätigungseinrichtung ohne manuellen Kontakt mit der Abdeckung in die Tülle eingeführt werden kann. Ferner dadurch, dass die Abdeckung der Tülle zusätzlich durch eine Kappe, z.B. eine Schraubkappe oder eine aufrastbare Kappe, abgedeckt werden kann, die erst kurz vor dem Einsetzen des Beutels in die Vorrichtung entfernt wird. Durch das Zusammenführen des Trinkwassers und Getränkekonzentrats in einer Mischkammer vor dem Auslass zu einem Getränkebehälter wird die Geschwindigkeit der Herstellung des Mischgetränks erhöht und die Vermischung von Trinkwasser und Getränkekonzentrat verbessert.

Gemäß einer Ausführungsart der Erfindung ist der Träger an einem von der Anschlagplatte entfernten Rand um eine Schwenkachse schwenkbar gelagert und aus einer Ladestellung, in der die Einsetzöffnung der Anschlagplatte oberhalb der Schwenkachse angeordnet ist, in eine Abgabestellung, in der die Einsetzöffnung der Anschlagplatte unterhalb der Schwenkachse angeordnet ist, schwenkbar. Diese Ausführungsart vermeidet, dass beim Einsetzen einer Nachfülleinheit in die Vorrichtung oder beim Entnehmen einer Nachfülleinheit aus der Vorrichtung Getränkekonzentrat unkontrolliert austritt. In der Abgabestellung kann das Getränkekonzentrat in die Pumpe nachlaufen.

Gemäß einer weiteren Ausführungsart ist der Dorn ein angespitztes Rohr, vorzugsweise aus Edelstahl. Ein angespitztes Rohr kann leicht in eine Folie oder eine andere dünnwandige Abdeckung aus Kunststoff eindringen. Die Verwendung eines Rohrs aus Edelstahl ist wegen der chemischen Beständigkeit bzw. Lebensmitteltauglichkeit von Vorteil.

Wenn der Dorn in die Abdeckung am Ende der Tülle eingestochen ist und in die Tülle eingreift, kann durch die Flächenpressung zwischen Dorn und Abdeckung ein Austreten von Getränkekonzentrat verhindert werden. Insbesondere bei Ausführung der Abdeckung als Folie kann dies unzureichend sein. Zum Verhindern des Auftretens von Getränkekonzentrat zwischen Dorn und Abdeckung ist gemäß einer weiteren Ausführungsart konzentrisch um den Dorn ein Dichtelement, vorzugsweise ein O-Ring, angeordnet, das ausgebildet ist, am stirnseitigen Rand der Tülle oder auf dem darauf befestigten Rand der Abdeckung abdichtend anzuliegen, wenn der Dorn in der Eingriffsstellung angeordnet ist.

Gemäß einer weiteren Ausführungsart weist die Verlagerungseinrichtung einen senkrecht zur Anschlagplatte am Träger geführten Schlitten auf, an dem der Dorn und gegebenenfalls das Dichtelement gehalten ist, und weist die Betätigungseinrichtung ein am Träger gelagertes Getriebe auf, das ausgebildet ist, den Schlitten mit dem Dorn und gegebenenfalls dem Dichtelement aus der Freigabestellung in die Eingriffsstellung und aus der Eingriffsstellung in die Freigabestellung zu verlagern. Hierdurch sind Dorn und gegebenenfalls das Dichtelement besonders einfach, präzise und ohne Verunreinigung von der Freigabestellung in die Eingriffsstellung und umgekehrt verlagerbar.

Gemäß einer weiteren Ausführungsart umfasst die Vorrichtung mindestens eine Federeinrichtung, die an der Betätigungseinrichtung und/oder an der Verlagerungseinrichtung und an dem Träger angreift und ausgebildet ist, den Dorn in der Freigabestellung und/oder in der Eingriffsstellung zu halten. Durch die Federeinrichtung wird der Dorn und gegebenenfalls das Dichtelement in der eingestellten Freigabestellung und/oder Eingriffsstellung gesichert.

Gemäß einer weiteren Ausführungsart ist ein die Pumpe antreibender Elektromotor mit einer elektrischen Steuerungseinrichtung verbunden, die ausgebildet ist, die von der Pumpe geförderte Menge des Getränkekonzentrats für eine Getränkeportion einzustellen. Die von der Pumpe geförderte Menge wird vorzugsweise über die Laufzeit und die Drehzahl der Pumpe eingestellt.

Gemäß einer weiteren Ausführungsart ist in der zweiten Verbindungsleitung eine Kühleinrichtung angeordnet, die ausgebildet ist, das Trinkwasser auf eine vorgegebene Temperatur zu kühlen. Hierdurch kann die Temperatur des Mischgetränkes entsprechend den Wünschen des Konsumenten eingestellt werden. Gemäß einer weiteren Ausführungsart umfasst die Kühleinrichtung einen Temperaturregler, um die Temperatur des Trinkwassers auf einen vorgegebenen Wert zu regeln. Gemäß einer weiteren Ausführungsart ist die Steuerungseinrichtung mit der Kühleinrichtung verbunden und ausgebildet, die Temperatur einzustellen, auf die das Trinkwasser von der Kühleinrichtung gekühlt wird.

Gemäß einer weiteren Ausführungsart ist in der zweiten Verbindungsleitung ein elektrisches Ventil angeordnet und die Steuerungseinrichtung ausgebildet, die Menge des Trinkwassers für eine Getränkeportion einzustellen. Hierdurch wird die Herstellung eines Mischgetränks mit einem bestimmten Mengenverhältnis von Frischwasser und Getränkekonzentrat erleichtert. Ferner ermöglicht diese Ausführungsart das Bereitstellen einer bestimmten Menge reinen Trinkwassers ohne Zusatz von Getränkekonzentrat und das Spülen der Mischkammer und des Auslasses mit Trinkwasser. Alternativ ist in der zweiten Verbindungsleitung ein manuelles Ventil zum Einstellen der Menge des Trinkwassers für eine Getränkeportion, zur Abgabe von reinem Trinkwasser oder zum Spülen vorhanden.

Gemäß einer weiteren Ausführungsart weist die Vorrichtung mehrere Anordnungen aus einem Dorn und einem Träger für die Lagerung von mehreren Nachfülleinheiten mit gleichen oder verschiedenen Getränkekonzentraten auf, wobei in mit den Durchgangskanälen der verschiedenen Dorne verbundenen ersten Verbindungsleitungen jeweils eine Pumpe angeordnet ist und die anderen Enden der ersten Verbindungsleitungen mit der Mischkammer verbunden sind, wobei die Steuerungseinrichtung ausgebildet ist, durch Steuern der Pumpen die Abgabe von Getränkekonzentraten aus verschiedenen Nachfülleinheiten zu steuern. Hierdurch wird die Herstellung von Mischgetränken mit Getränkekonzentraten verschiedener Geschmacksrichtungen (z.B. Apfel oder Orange oder andere Geschmacksrichtungen) erleichtert und/oder nach Erschöpfung einer Nachfülleinheit die Nutzung einer frischen Nachfülleinheit durch Auswahl eines anderen oder gleichen Produktes über eine Bedientaste ermöglicht.

Gemäß einer weiteren Ausführungsart ist die Steuerungseinrichtung mit einer Bedieneinrichtung, insbesondere mit einer mehrere Bedientasten umfassenden Bedieneinrichtung, verbunden, die ausgebildet ist, mindestens einen der nachfolgenden Parameter einzustellen: Abgabe von reinem Trinkwasser ohne eingemischtes Getränkekonzentrat, Menge einer Getränkeportion, Geschmacksrichtung des Mischgetränks. Diese Parameter sind vorzugsweise durch den Konsumenten einstellbar.

Gemäß einer weiteren Ausführungsart umfasst die Steuerungseinrichtung mindestens eine Einstelleinrichtung, die ausgebildet ist, mindestens einen der nachfolgenden Parameter einzustellen: Mengenverhältnis von Getränkekonzentrat und Trinkwasser in einem Mischgetränk, Temperatur des Mischgetränks. Diese Parameter sind vorzugsweise durch den Betreiber einstellbar.

Ferner wird die Aufgabe durch ein System gemäß Anspruch 14 gelöst.

Die erfindungsgemäße Nachfülleinheit für die Bereitstellung eines Getränkekonzentrats für die Herstellung von Mischgetränken aus Trinkwasser und Getränkekonzentrat umfasst einen Beutel aus einem flexiblem Flachmaterial, eine vom Beutel vorstehende Tülle mit einer radial vorstehenden Scheibe oder mehreren radial vorstehenden Vorsprüngen an verschiedenen Umfangspositionen in einem Abstand vom Beutel, eine das obere Ende der Tülle flüssigkeitsdicht verschließende, mit einem Dorn durchstoßbare Abdeckung und ein im Beutel enthaltenes Getränkekonzentrat.

Gemäß einer Ausführungsart der Erfindung umfasst die Tülle ein oberhalb der Scheibe oder der Vorsprünge angeordnetes Außengewinde zum Aufschrauben einer Schraubkappe. Alternativ weist die Tülle Mittel zum Verrasten einer Kappe mit weiteren Mitteln zum Verrasten auf.

Gemäß einer Ausführungsart der Erfindung ist die Abdeckung einer auf die Tülle aufgesiegelte Folie. Gemäß einer weiteren Ausführungsart ist auf das Außengewinde eine mit einem entsprechenden Innengewinde versehene Schraubkappe aufgeschraubt. Die Schraubkappe wird vorzugsweise vor dem Einsetzen der Nachfüllpackung in die Vorrichtung von der Nachfüllpackung abgeschraubt.

Gemäß den obigen Erläuterungen zur Vorrichtung vereinfacht die erfindungsgemäße Nachfüllpackung die Logistik und den Verpackungsaufwand und ermöglicht ein hygienisches und schnelles Einsetzen und Entnehmen der Nachfüllpackung in und aus der Vorrichtung mit wenigen Handgriffen. Durch Einstecken eines Dorns in die Abdeckung und gegebenenfalls zusätzliches Abdichten am stirnseitigen Rand der Tülle bzw. der Abdeckung wird ein unkontrolliertes Austreten von Getränkekonzentrat aus dem Beutel vermieden.

Gemäß einer weiteren Ausführungsart besteht der Beutel aus einer Kunststofffolie oder aus einem Verbundmaterial aus mehreren Kunststofffolien oder aus mindestens einer Kunststofffolie und einer Metallfolie.

Gemäß einer weiteren Ausführungsart weist die Tülle angrenzend an den Beutel eine radial vorstehende weitere Scheibe oder mehrere radial vorstehende weitere Vorsprünge an verschiedenen Umfangspositionen auf, die in einem Abstand von der Scheibe oder den mehreren Vorsprüngen angeordnet ist/sind. Zwischen der Scheibe und der weiteren Scheibe bzw. den Vorsprüngen und den weiteren Vorsprüngen läuft ein Spalt um die Tülle um, in den die Ränder der Anschlagplatte, welche die Einsetzöffnung begrenzen, eingreifen können. Die weitere Scheibe bzw. die weiteren Vorsprünge dienen dazu, die Tülle auf der Seite der Anschlagplatte abzustützen, die der Lagerfläche zugewandt ist. Alternativ stützt sich der Beutel der Nachfülleinheit direkt auf dieser Seite der Anschlagplatte ab.

Gemäß einer weiteren Ausführungsart besteht die Tülle aus einem Kunststoff. Gemäß einer weiteren Ausführungsart ist die Tülle aus Polypropylen oder aus Polyethylen oder aus einem anderen Thermoplasten oder aus einem thermoplastischen Elastomer oder aus einem Duroplasten hergestellt. Gemäß einer weiteren Ausführungsart ist die Tülle einteilig hergestellt. Gemäß einer weiteren Ausführungsart ist die Tülle ein Spritzgußteil.

Gemäß einer weiteren Ausführungsart ist die Tülle mit dem Beutel versiegelt (durch Einleiten von Temperatur und Druck).

Gemäß einer weiteren Ausführungsart ist die Abdeckung Alu-Verbundfolie ("Alufolie") oder eine Folie aus Polypropylen oder aus Polyethylen oder aus einem anderen Thermoplasten oder aus einem thermoplastischen Elastomer hergestellt.

Gemäß einer weiteren Ausführungsart ist die Schraubkappe aus Kunststoff hergestellt. Gemäß einer weiteren Ausführungsart ist die Schraubkappe aus Polypropylen oder aus Polyethylen oder aus einem anderen Thermoplasten oder aus einem thermoplastischen Elastomer oder aus einem Duroplasten hergestellt. Gemäß einer weiteren Ausführungsart ist die Schraubkappe ein Spritzgußteil.

Ferner betrifft die Erfindung ein System für die Herstellung von Mischgetränken umfassend eine Vorrichtung gemäß einem der Ansprüche 1 bis 13 und eine Nachfülleinheit gemäß einem der Ansprüche 14 bis 18.

Die Erfindung wird nachfolgend anhand der anliegenden Zeichnungen eines Ausführungsbeispiels näher erläutert. In den Zeichnungen zeigen:
- Fig. 1: einen Träger der Vorrichtung mit einem darüber angeordneten Beutel mit abgedrehter Schraubkappe in einer Perspektivansicht schräg von oben und von der Seite;
- Fig. 2: Beutel und Träger sowie weitere Teile der Vorrichtung in einem Prinzipbild.

In der vorliegenden Anmeldung beziehen sich die Angaben "oben" und "unten" auf die Ausrichtung des Beutels so, dass die Tülle vertikal ausgerichtet und oberhalb des Beutels angeordnet ist.

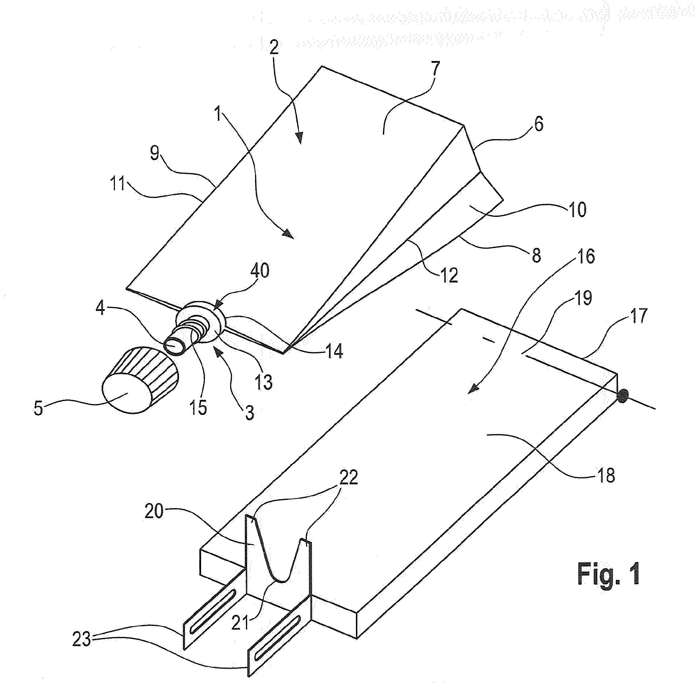

Gemäß Fig. 1 umfasst eine Nachfülleinheit 1 einen Beutel 2, eine von dem Beutel vorstehende Tülle 3 mit einer Abdeckung 4 in Form einer aufgesiegelten Folie sowie eine Schraubkappe 5.

Der Beutel 2 weist eine rechteckige Bodenwand 6, von den längsseitigen Rändern der Bodenwand 5 vorstehende, große Seitenwände 7, 8 und von den querseitigen Rändern der Bodenwand vorstehende, randseitig mit den Rändern der großen Seitenwände 7, 8 verbundene, schmale Seitenwände 9, 10 auf. Die schmalen Seitenwände 9, 10 haben jeweils in der Mitte eine Falte 11, 12.

Der Beutel 2 ist aus einer Kunststofffolie oder aus einer Verbundfolie hergestellt.

Die Tülle 3 ist grundsätzlich rohrförmig ausgebildet und steht zwischen den oberen Rändern der großen Seitenwände 7, 8 in den Beutel 2 hinein. Die oberen Ränder der großen Seitenwände 7, 8 sind mit den oberen Rändern der schmalen Seitenwände 9, 10 versiegelt und abdichtend mit der Tülle 3 verbunden.

Die Tülle 3 trägt in einem Abstand vom Beutel 2 eine Scheibe 13. Direkt angrenzend an den Beutel 2 trägt sie eine weitere Scheibe 14. Oberhalb der Scheibe 13 läuft ein Außengewinde 15 auf dem Außenumfang der Tülle 3 um.

Die Tülle 3 ist beispielsweise aus einem thermoplastischen Kunststoff spritzgegossen.

Auf die Stirnseite der Tülle 3 ist die Folie als Abdeckung 4 aufgesiegelt.

Die Schraubkappe 5 weist innen ein dem Außengewinde 15 entsprechendes Innengewinde auf, mit dem es auf das Außengewinde 15 der Tülle 3 aufschraubbar ist.

Gemäß Fig. 1 weist ein Träger 16 für die Nachfülleinheit eine Schale 17 mit einer flachen Lagerfläche 18 an der Oberseite auf. Die Schale 17 ist um eine horizontale Schwenkachse 19 schwenkbar gelagert. An dem von der Schwenkachse 19 entfernten Rand steht bezüglich der Lagerfläche 18 eine Anschlagplatte 20 vor. Diese weist eine von ihrem oberen Rand ausgehend nach unten sich erstreckende Einsetzöffnung 21 auf. Die Einsetzöffnung 21 hat eine parabelförmige Kontur, die sich nach oben verbreitert. Sie wird durch gabelzinkenartige Abschnitte 22 der Anschlagplatte 20 begrenzt.

Auf der von der Lagerfläche 18 abgewandten Seite der Anschlagplatte 20 stehen von dem Träger 16 Führungselemente 23 für einen Schlitten vor.

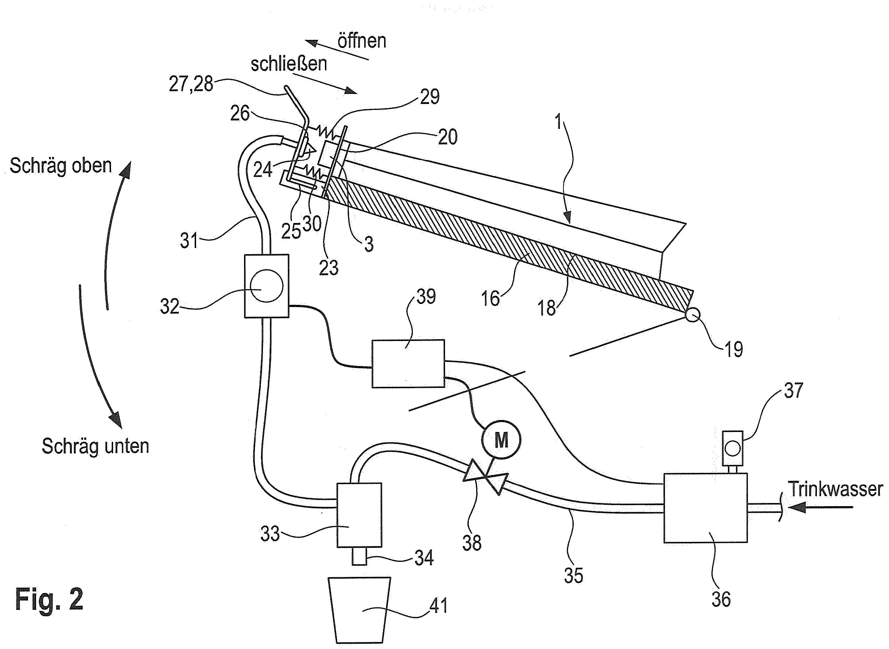

Gemäß Fig. 2 ist ein Dorn 24 in Form eines angespitzten Röhrchens vorzugsweise aus Edelstahl an einem Schlitten 25 gehalten, der an den Führungselementen 23 geführt ist. Der Dorn 24 ist mit seinem spitzen Ende auf das Zentrum der Einsetzöffnung 21 ausgerichtet. Den Dorn 24 umgibt ein Dichtelement 26 in Form eines O-Ringes.

Ferner ist eine Betätigungseinrichtung 27 in Form eines am Träger 16 gelagerten Getriebes mit einem Spannhebel 28 vorhanden. Mittels der Betätigungseinrichtung 27 ist der Schlitten 25 mit dem Dorn 24 aus der in Fig. 2 gezeigten Freigabeposition in eine näher an der Anschlagplatte 20 angeordnete Eingriffsposition verlagerbar.

Ferner greifen an der Betätigungseinrichtung 27 und an dem Träger 16 Federeinrichtungen 29, 30 an, die ausgebildet sind, den Dorn 24 in der Freigabestellung und in der Eingriffsstellung zu halten. Beim Betätigen der Betätigungseinrichtung 27 muss die Federwirkung der Federeinrichtung 29, 30 überwunden werden, um den Dorn 24 aus der Freigabestellung in die Eingriffsstellung oder umgekehrt zu verlagern.

Mit dem von der Anschlagplatte 20 entfernten Ende des Dorns 24 ist eine erste Verbindungsleitung 31 in Form eines flexiblen Schlauches verbunden. In der ersten Verbindungsleitung ist eine Pumpe 32 angeordnet. Das andere Ende der ersten Verbindungsleitung 31 ist mit einer Mischkammer 33 verbunden, die unten einen Auslass 34 für ein Mischgetränk aufweist.

An die Mischkammer 33 ist eine zweite Verbindungsleitung 35 zu einer Trinkwasserversorgung (z.B. zu einem kommunalen Trinkwassernetz) angeschlossen. In der zweiten Verbindungsleitung 35 ist eine Kühleinrichtung 36 angeordnet, die einen Temperaturregler 37 umfasst. Die Kühleinrichtung 36 ist ausgebildet, das Trinkwasser im Durchlauf auf eine vorgegebene Temperatur zu kühlen. In der zweiten Verbindungsleitung 35 ist ein als Magnetventil ausgebildetes elektrisches Ventil 38 angeordnet, um die Trinkwasserversorgung wahlweise mit der Mischkammer 33 zu verbinden und von dieser zu trennen.

Eine elektrische Steuerungsvorrichtung 39 ist über elektrische Verbindungsleitungen mit einem die Pumpe 32 antreibenden Elektromotor, der Kühleinrichtung 36 und dem elektrischen Ventil 38 verbunden.

Zum Einsetzen einer Nachfülleinheit 1 wird der Träger 16 um die Schwenkachse 19 in eine Ladestellung hochgeschwenkt, in der die Einsetzöffnung 21 oberhalb der Schwenkachse 19 angeordnet ist. Vorzugsweise ist der Träger 16 in der Ladestellung verriegelbar. Vor dem Bestücken des Trägers mit der Nachfülleinheit 1 wird die Schraubkappe 5 von der Tülle 3 abgeschraubt.

In der Ladestellung wird die Nachfülleinheit 1 mit dem Beutel 2 auf die Lagerfläche 18 des Trägers 16 aufgelegt und mit der Tülle 3 in die Einsetzöffnung 21 eingesetzt. Hierbei greifen die Ränder der gabelzinkenartigen Abschnitte 22 der Anschlagplatte 20, welche die Einsetzöffnung 21 begrenzen, in den Spalt 40 bzw. die Nut zwischen der Scheibe 13 und der weiteren Scheibe 14 ein. Die Tülle 3 wird in eine definierte Stellung am unteren Ende der Einführöffnung 21 eingesetzt.

Durch Betätigen des Spannhebels 28 der Betätigungseinrichtung 27 wird der Schlitten 25 der Verlagerungseinrichtung verlagert, bis der Dorn 24 die Abdeckung 4 durchstößt und in der Eingriffsstellung in die Tülle 3 eingreift. In dieser Stellung dichtet das Dichtelement 26 auf der Stirnseite der Tülle 3 ab und wird der Dorn 24 durch die Federeinrichtungen 29, 30 gehalten.

Hierbei wird ein fehlerhaftes Einlegen bzw. Positionieren durch die Abstimmung der Einsetzöffnung 21 der Anschlagplatte 20 und der Tülle 3 aufeinander vermieden. Durch den Schlitten 25 wird die genaue Zentrierung des Dorns 24 auf die Tülle 3 und durch die Federeinrichtungen 29, 30 die abdichtende Anlage des Dichtelementes 26 an der Tülle 3 gewährleistet.

Danach wird der Träger 16 mit der korrekt eingelegten Nachfülleinheit 1 in Pfeilrichtung nach unten in die Abgabestellung geschwenkt. In der Abgabestellung ist der Träger 16 vorzugsweise verriegelbar.

Getränkekonzentrat kann nun mittels der Pumpe 32 über den ersten Verbindungsschlauch 31 aus der Nachfülleinheit 1 angesaugt und der Mischkammer 33 entsprechend dem gewünschten Mischungsverhältnis zugeführt werden. Das frei wählbare Mischungsverhältnis kann über die Laufzeit und die Drehzahl der Pumpe 32 und die Dauer der Öffnung des Ventils 38 bestimmt werden. Die Laufzeit und die Drehzahl wird durch die elektronische Steuerungseinrichtung 39 geregelt. Zusätzlich wird durch die elektronische Steuerungseinrichtung 39 das elektrische Ventil 38 geöffnet, sodass gleichzeitig eine bestimmte Menge Trinkwasser in die Mischkammer 33 gelangt.

In der Mischkammer 33 wird das Getränkekonzentrat mit dem Trinkwasser aus der zweiten Verbindungsleitung 35 vermischt und durch den Auslass 34 in Trinkgefäß 41 ausgegeben. Die Temperatur des Mischgetränks wird durch das Trinkwasser bestimmt, welches in der Kühleinrichtung 36 auf eine definierte Temperatur gekühlt wird. Die Temperatur ist durch den Regler 37 einstellbar.

Wenn die Nachfülleinheit 1 entleert ist, wird der Träger 16 erneut in die Ladestellung hochgeklappt, der Dorn 24 in die Freigabestellung verlagert und anschließend die Nachfülleinheit 1 vom Träger 16 abgenommen.

Die vorstehenden Elemente der Vorrichtung sind vorzugsweise in einem Gehäuse angeordnet, wobei sich der Auslass oberhalb einer Gehäuseöffnung befindet, in die ein Trinkbehälter 41 einsetzbar ist. Das Gehäuse ist vorzugsweise mit einem Deckel ausgestattet, der einen Zugang zu dem Träger 16 ermöglicht, um eine Nachfülleinheit 1 einzusetzen und zu entnehmen.

## Patentansprüche

1. Vorrichtung für die Herstellung von Mischgetränken aus Trinkwasser und einem Getränkekonzentrat aus einer Nachfülleinheit (1) mit einem Beutel (2) aus einem flexiblen Flachmaterial, einer vom Beutel (2) vorstehenden Tülle (3) mit einer radial vorstehenden Scheibe (13) oder mehreren radial vorstehenden Vorsprüngen an verschiedenen Umfangspositionen in einem Abstand von dem Beutel (2), einer das obere Ende flüssigkeitsdicht verschließenden, durchstoßbaren Abdeckung (4) und einem im Beutel (2) enthaltenen Getränkekonzentrat umfassend
• einen Träger (16) mit einer Lagerfläche (18) zum Auflegen des Beutels (2),
• eine bezüglich der Lagerfläche (18) vom Träger (16) nach oben vorstehende Anschlagplatte (20) mit einer vom oberen Rand der Anschlagplatte ausgehend nach unten sich erstreckende Einsetzöffnung (21) zum Einsetzen der Tülle (3), sodass die Anschlagplatte (20) am Rand der Einsetzöffnung (21) in einen Spalt (40) zwischen dem Beutel (2) und der Scheibe (13) oder den Vorsprüngen eingreift, wenn der Beutel (2) auf dem Träger (16) aufliegt,
• einen auf die Einsetzöffnung (21) ausgerichteten, einen Durchgangskanal aufweisenden Dorn (24) auf der von der Lagerfläche (18) abgewandten Seite der Anschlagplatte (20),
• eine den Dorn (24) haltende Verlagerungseinrichtung (25) mit einer Betätigungseinrichtung (27), die ausgebildet ist, den Dorn (24) aus einer Freigabestellung in einem Abstand von der Anschlagplatte (20), der ein Einsetzen der Tülle (3) in die Einsetzöffnung (21) zulässt, in eine Eingriffsstellung zu verlagern, in der der Dorn (24) die Abdeckung (4) am Ende der Tülle (3) durchsticht und in die Tülle (3) eingreift,
• eine mit dem Durchgangskanal des Dorns (24) verbundene erste Verbindungsleitung (31),
• eine in der ersten Verbindungsleitung (31) angeordnete Pumpe (32),
• eine mit dem anderen Ende der ersten Verbindungsleitung (31) verbundene Mischkammer (33) mit einem Auslass (34) für ein Mischgetränk
• und eine mit der Mischkammer (33) verbundene zweite Verbindungsleitung (35) zu einer Trinkwasserversorgung.

2. Vorrichtung nach Anspruch 1, bei der der Träger (16) an einem von der Anschlagplatte (20) entfernten Rand um eine horizontale Schwenkachse (19) schwenkbar gelagert ist und aus einer Ladestellung, in der die Einsetzöffnung (21) der Anschlagplatte (20) oberhalb der Schwenkachse (19) angeordnet ist, in eine Abgabestellung, in der die Einsetzöffnung (21) der Anschlagplatte (20) unterhalb der Schwenkachse (19) angeordnet ist, schwenkbar ist.

3. Vorrichtung nach Anspruch 1 oder 2, bei der der Dorn (24) ein angespitztes Rohr, vorzugsweise ein angespitztes Edelstahlrohr, ist.

4. Vorrichtung nach einem der Ansprüche 1 bis 3, bei der konzentrisch um den Dorn (24) ein Dichtelement (26), vorzugsweise ein O-Ring, angeordnet ist, das ausgebildet ist, am stirnseitigen Rand der Tülle (3) oder dem darauf befestigten Rand der Abdeckung (4) abdichtend anzuliegen, wenn der Dorn (24) in der Eingriffsstellung angeordnet ist.

5. Vorrichtung nach einem der Ansprüche 1 bis 4, bei der die Verlagerungseinrichtung (25) einen senkrecht zur Anschlagplatte am Träger geführten Schlitten aufweist, an dem der Dorn (24) und gegebenenfalls das Dichtelement (26) gehalten ist, und die Betätigungseinrichtung (27) ein am Träger gelagertes Getriebe aufweist, das ausgebildet ist, den Schlitten mit dem Dorn (24) und gegebenenfalls dem Dichtelement (26) aus der Freigabestellung in die Eingriffsstellung und aus der Eingriffsstellung in die Freigabestellung zu verlagern.

6. Vorrichtung nach einem der Ansprüche 1 bis 5 mit mindestens einer Federeinrichtung (29, 30), die an der Betätigungseinrichtung (27) und/oder an der Verlagerungseinrichtung und an dem Träger (16) angreift und ausgebildet ist, den Dorn (24) in der Freigabestellung und/oder in der Eingriffsstellung zu halten.

7. Vorrichtung nach einem der Ansprüche 1 bis 6, bei der ein die Pumpe (32) antreibender Elektromotor mit einer elektrischen Steuerungseinrichtung (39) verbunden ist, die ausgebildet ist, die von der Pumpe (32) geförderte Menge des Getränkekonzentrats für eine Getränkeportion einzustellen.

8. Vorrichtung nach einem der Ansprüche 1 bis 7, bei der in der zweiten Verbindungsleitung (35) eine Kühleinrichtung (36) angeordnet ist, die ausgebildet ist, das Trinkwasser auf eine vorgegebene Temperatur zu kühlen.

9. Vorrichtung nach Anspruch 8, bei der die Kühleinrichtung (36) einen Temperaturregler (37) umfasst, um die Temperatur des Trinkwassers auf einen vorgegebenen Wert zu regeln.

10. Vorrichtung nach einem der Ansprüche 8 bis 9, bei der die Steuerungseinrichtung (39) mit der Kühleinrichtung (36) verbunden und ausgebildet ist, die Temperatur einzustellen, auf die das Trinkwasser von der Kühleinrichtung (36) gekühlt wird.

11. Vorrichtung nach einem der Ansprüche 7 bis 10, bei der in der zweiten Verbindungsleitung (35) ein elektrisches Ventil (38) angeordnet ist und die Steuerungseinrichtung (39) ausgebildet ist, die Menge des Trinkwassers für eine Getränkeportion einzustellen.

12. Vorrichtung nach an der Ansprüche 1 bis 11, die mehrere Anordnungen aus einem Dorn (24) und einem Träger (16) für die Lagerung von mehreren Nachfülleinheiten (1) mit gleichen oder verschiedenen Getränkekonzentraten aufweist, wobei die mit den Durchgangskanälen der verschiedenen Dorne (24) verbundenen ersten Verbindungsleitungen (31) jeweils eine Pumpe (32) angeordnet ist und die anderen Enden der ersten Verbindungsleitungen mit der Mischkammer verbunden sind, wobei die Steuerungseinrichtung (39) ausgebildet ist, durch Steuern der Pumpen (32) die Abgabe von Getränkekonzentraten aus verschiedenen Nachfülleinheiten (1) zu steuern.

13. Vorrichtung nach einem der Ansprüche 1 bis 12, bei der die Steuerungseinrichtung (39) mit einer Bedieneinrichtung, insbesondere mit einer mehrere Bedientasten umfassenden Bedieneinrichtung, verbunden ist, die ausgebildet ist, mindestens einen der nachfolgenden Parameter einzustellen: Abgabe von reinem Trinkwasser ohne eingemischtes Getränkekonzentrat, Menge einer Getränkeportion, Geschmacksrichtung des Mischgetränks und/oder bei der die Steuerungseinrichtung mindestens eine Einstelleinrichtung umfasst, die ausgebildet ist, mindestens einen der nachfolgenden Parameter einzustellen: Mengenverhältnis von Getränkekonzentrat und Trinkwasser in einem Mischgetränk, Temperatur des Mischgetränks.

14. System für die Herstellung von Mischgetränken umfassend eine Vorrichtung gemäß einem der Ansprüche 1 bis 13 und eine Nachfülleinheit für die Bereitstellung eines Getränkekonzentrats für die Herstellung von Mischgetränken aus Trinkwasser und Getränkekonzentrat mit einem Beutel (2) aus einem flexiblen Flachmaterial, einer vom Beutel (2) vorstehenden Tülle (3) mit einer radial vorstehenden Scheibe (13) oder mehreren radial vorstehenden Vorsprüngen an verschiedenen Umfangspositionen in einem Abstand von dem Beutel (2), einer das obere Ende der Tülle (3) flüssigkeitsdicht verschließenden, durchstoßbaren Abdeckung (4) und einem im Beutel (2) enthaltenen Getränkekonzentrat.

15. System nach Anspruch 14, bei dem die Nachfülleinheit (1) ein oberhalb der Scheibe (13) oder der Vorsprünge angeordnetes Außengewinde (15) oder Mittel zum Verrasten, zum Aufschrauben oder Aufrasten einer Schraubkappe (5) umfasst.

16. System nach Anspruch 14 oder 15, bei dem die Abdeckung (4) der Nachfülleinheit (1) eine aufgesiegelte Folie ist.

17. System nach einem der Ansprüche 14 bis 16, bei dem die Tülle (3) der Nachfülleinheit (1) angrenzend an den Beutel (2) eine radial vorstehende, weitere Scheibe (14) oder mehrere radial vorstehende weitere Vorsprünge an verschiedenen Umfangspositionen aufweist, die in einem Abstand von der Scheibe (13) oder den mehreren Vorsprüngen angeordnet ist/sind, sodass ein Spalt (40) zwischen der Scheibe (13) oder den mehreren radial vorstehenden Vorsprüngen und der weiteren Scheibe (14) oder den mehreren weiteren radialen Vorsprüngen vorhanden ist.

18. System gemäß einem der Ansprüche 14 bis 17, bei dem die Nachfülleinheit (1) eine Schraubkappe (5) mit einem Innengewinde umfasst, die auf das Außengewinde der Tülle aufgeschraubt ist, oder eine Kappe mit weiteren Mitteln zum Verrasten, die mit den Mitteln zum Verrasten der Tülle verrastet sind, oder eine auf die Tülle aufgeklemmte oder ablösbar aufgeklebte Kappe.

## Claims

1. Device for the production of mixed drinks made of drinking water and a drink concentrate, consisting of a refill unit (1) with a bag (2) made of a flexible flat material, a spout (3) protruding from the bag (2) with a radially protruding disc (13) or several radial protrusions at various peripheral positions at a distance from the bag (2), a cover which closes the top end in a way which is liquid-tight and can be perforated (4) and a drink concentrate in the bag (2), all comprising
• a bracket (16) with a storage space (18) on which to place the bag (2),
• a stop plate (20) which protrudes upwards from the bracket (16) in relation to the storage space (18) with an insertion aperture (21) starting from the upper edge of the stop plate and extending downwards for the insertion of the spout (3), meaning that the stop plate (20) comes into action at the edge of the insertion aperture (21) in a slot (40) between the bag (2) and the disc (13) or the protrusions if the bag (2) is resting on the bracket (16),
• a pin (24) directed towards the insertion aperture (21) and featuring a channel on the side of the stop plate (20) facing away from the storage space (18),
• a shifting device (25) holding the pin (24) with an operating device (27) designed to shift the pin (24) from a release position, at a distance from the stop plate (20) which allows the spout (3) to be inserted into the insertion aperture (21), into an engaged position in which the pin (24) perforates the cover (4) at the end of the spout (3) and engages with the spout (3),
• a first connecting line (31) connected to the pin's (24) channel,
• a pump (32) arranged in the first connecting line (31),
• a mixing chamber (33) connected to the other end of the first connecting line (31) with an outlet (34) for a mixed drink
• and a second connecting line (35) to a drinking water supply which is connected to the mixing chamber (33).

2. Device according to claim 1 whereby the bracket (16) is swivel-mounted on an edge at a distance from the stop plate (20) around a horizontal swivel axis (19) and can be pivoted from a charging position, in which the insertion aperture (21) of the stop plate (20) is arranged above the swivel axis (19), into a dispensing position in which the insertion aperture (21) of the stop plate (20) is arranged below the swivel axis (19).

3. Device according to claim 1 or 2 whereby the pin (24) is a sharpened tube, preferably a sharpened stainless steel tube.

4. Device according to one of claims 1 to 3, whereby a sealing element (26), preferably an O-ring, is arranged concentrically around the pin (24) and is designed to rest on the frontside edge of spout (3) or the cover edge (4) fixed onto it in a way which seals it up if the pin (24) is in the engaged position.

5. Device according to one of claims 1 to 4, whereby the shifting device (25) features a slide passing vertically to the stop plate on the bracket on which the pin (24) and, where applicable, the sealing element (26) is held and the operating device (27) features a gearing mechanism mounted on the bracket which is designed to shift the slide with the pin (24) and, where applicable, the sealing element (26) from the release position into the engaged position and from the engaged position into the release position.

6. Device according to one of claims 1 to 5, with at least one spring device (29, 30) which engages on the operating device (27) and/or on the shifting device and on the bracket (16) and is designed to hold the pin (24) in the release position and/or the engaged position.

7. Device according to one of claims 1 to 6, whereby an electric motor powering the pump (32) is connected to an electric control device (39) which is designed to set the quantity of drink concentrate conveyed from the pump (32) for a drink portion.

8. Device according to one of claims 1 to 7, whereby a cooling device (36) designed to cool the drinking water to a specified temperature is arranged in the second connecting line (35).

9. Device according to claim 8, whereby the cooling device (36) includes a temperature regulator (37) to regulate the drinking water's temperature to a specified value.

10. Device according to one of claims 8 to 9, whereby the control device (39) is connected to the cooling device (36) and designed to set the temperature to which the drinking water is cooled by the cooling device (36).

11. Device according to one of claims 7 to 10, whereby an electric valve (38) is arranged in the second connecting line (35) and the control device (39) is designed to set the quantity of drinking water for a drink portion.

12. Device according to one of claims 1 to 11, featuring several arrangements consisting of a pin (24) and a bracket (16) for the mounting of several refill units (1) with the same or different drink concentrates, whereby the first connecting lines (31) connected to the channels of various pins (24) each have a pump (32) and the other ends of the first connecting lines are connected to the mixing chamber, with the control device (39) designed to control the dispensation of drink concentrates from various refill units (1) via pump controls (32).

13. Device according to one of claims 1 to 12, whereby the control device (39) is connected to an operator device, in particular with an operator device comprising several operator buttons, which is designed to set at least one of the following parameters: dispensing pure drinking water without a drink concentrate mixed in, quantity of a drink portion, flavour of mixed drink and/or where the control device comprises at least one setting designed to set at least one of the following
parameters: quantity ratio of drink concentrate and drinking water in a mixed drink, temperature of mixed drink.

14. System to produce mixed drinks including a device according to one of claims 1 to 13 and a refill unit for provision of a drink concentrate to produce mixed drinks from drinking water and a drink concentrate with a bag (2) made of flexible flat material, a spout (3) protruding from the bag (2) with a radially protruding disc (13) or several radial protrusions at peripheral positions at a distance from the bag (2), a cover which closes the top end of the spout (3) in a way which is liquid-tight and can be perforated (4) and a drink concentrate contained in the bag (2).

15. System according to claim 14, whereby the refill unit (1) includes an external thread (15) arranged above the disc (13) or the protrusions or a means of locking, screwing or snapping on a screw cap (5).

16. System according to claim 14 or 15, whereby the cover (4) of the refill unit (1) is a sealed-on film.

17. System according to one of claims 14 to 16, whereby the spout (3) of the refill unit (1) adjacent to the bag (2) features a further, radially protruding disc (14) or several further radial protrusions at various peripheral positions arranged at a distance to the disc (13) or the several protrusions so that there is a slot (40) between the disc (13) or the several radial protrusions and the other disc (14) or the several further radial protrusions.

18. System according to one of claims 14 to 17 whereby the refill unit (1) includes a screw cap (5) with an internal thread which is screwed on to the external thread of the spout or a cap with other means of locking which are locked with the locking means on the spout, or a cap clamped on to the spout or glued on in a detachable way.

## Revendications

1. Dispositif de fabrication de boissons mixtes composées d'eau potable et d'un concentré de boisson issu d'une recharge (1) avec un sachet (2) en un matériau plat souple, une douille (3) en saillie par rapport au sachet (2) avec une rondelle en saillie radiale (13) ou plusieurs crans en saillie radiale sur différentes positions circonférentielles à une certaine distance du sachet (2), un couvercle hermétique à l'extrémité supérieure, pouvant être percé (4), et un sachet (2) contenant le concentré de boisson ; le dispositif comprend
• un support (16) avec une surface d'appui (18) sur laquelle repose le sachet (2),
• une plaque d'arrêt (20) verticale en saillie par rapport à la surface d'appui (18) du support (16) avec un orifice (21) depuis le bord supérieur de la plaque d'arrêt vers le bas pour insérer la douille (3) de sorte que la plaque d'arrêt (20) s'engrène au bord de l'orifice (21) dans une fente (40) entre le sachet (2) et la rondelle (13) ou les crans lorsque le sachet (2) repose sur le support (16),
• une épine (24) avec à l'intérieur un canal de passage, orientée vers l'orifice (21), sur le côté de la plaque (20) opposé à la surface d'appui (18),
• un dispositif de déplacement (25) retenant l'épine (24) avec un système de commande (27) conçu pour faire passer l'épine (24) d'une position initiale à une certaine distance de la plaque (20), permettant d'insérer la douille (3) dans l'orifice (21), à une position de prise ou de contact dans laquelle l'épine (24) perce le couvercle (4) à l'extrémité de la douille (3) et s'insère dans la douille (3),
• un premier conduit de raccordement (31) relié au canal de passage de l'épine (24),
• une pompe (32) placée dans le premier conduit de raccordement (31),
• une chambre de mélange (33) avec une sortie (34) pour une boisson mixte, reliée à l'autre extrémité du premier conduit de raccordement (31),
• et un deuxième conduit de raccordement (35) à l'alimentation en eau potable relié à la chambre de mélange (33).

2. Dispositif répondant à l'exigence 1, dans lequel le support (16) est fixé sur un bord éloigné de la plaque (20) et peut pivoter autour d'un axe horizontal (19). Il peut alors passer d'une position de chargement, dans laquelle l'orifice (21) de la plaque (20) est situé au-dessus de l'axe de pivotement (19), à une position de débit/soutirage dans laquelle l'orifice (21) de la plaque (20) est situé au-dessous de l'axe de pivotement (19).

3. Dispositif répondant à l'exigence 1 ou 2, dans lequel l'épine (24) est un tube affûté, de préférence un tube affûté en acier inoxydable.

4. Dispositif répondant à l'une des exigences 1 à 3, dans lequel un élément d'étanchéité (26), de préférence un anneau torique, est placé autour de l'épine (24). Cet élément est conçu de manière à pouvoir être placé sur la partie frontale de la douille (3) ou sur le bord du couvercle fixé dessus (4) et à garantir l'étanchéité lorsque l'épine (24) est en position de prise/de contact.

5. Dispositif répondant à l'une des exigences 1 à 4, dans lequel le dispositif de déplacement (25) a la forme d'un chariot se déplaçant à la verticale par rapport à la plaque sur le support et retenant l'épine (24) et, le cas échéant, l'élément d'étanchéité (26). Dans cette configuration, le système de commande (27) est équipé d'un mécanisme de transmission placé sur le support permettant de faire passer le chariot avec l'épine (24) et, le cas échéant, l'élément d'étanchéité (26) de la position initiale à la position de prise/contact et, inversement, de la position de prise/contact à la position initiale.

6. Dispositif répondant à l'une des exigences 1 à 5 avec au moins un dispositif à ressort (29, 30), appliqué sur le système de commande (27) et/ou sur le dispositif de déplacement et sur le support (16) et permettant de maintenir l'épine (24) dans sa position initiale et/ou dans la position de prise/contact.

7. Dispositif répondant à l'une des exigences 1 à 6 dans lequel un moteur électrique entraînant une pompe (32) est relié à un système de réglage (39) électrique. Ce système de réglage permet d'ajuster la quantité de concentré débitée par la pompe (32) pour une dose.

8. Dispositif répondant à l'une des exigences 1 à 7, dans lequel une installation de refroidissement (36) est placée dans le deuxième conduit de raccordement (35) pour refroidir l'eau potable à une température prédéfinie.

9. Dispositif répondant à l'exigence 8, dans lequel l'installation de refroidissement (36) est dotée d'un thermostat (37) pour régler la température de l'eau potable sur une valeur prédéfinie.

10. Dispositif répondant à l'une des exigences 8 à 9, dans lequel le système de réglage (39) est relié à l'installation de refroidissement (36), et permettant de régler la température à laquelle l'installation de refroidissement (36) refroidit l'eau potable.

11. Dispositif répondant à l'une des exigences 7 à 10, dans lequel une soupape électrique (38) est placée dans le deuxième conduit de raccordement (35) et le système de réglage (39) permet d'ajuster la quantité d'eau potable nécessaire à une dose.

12. Dispositif répondant à l'une des exigences 1 à 11, dans lequel il est possible, à partir d'une épine (24) et d'un support (16), de placer plusieurs recharges (1) contenant les mêmes concentrés ou des concentrés différents. Les premiers conduits de raccordement (31) reliés aux canaux de passage des différentes épines (24) sont dotés respectivement d'une pompe (32) et les autres extrémités des premiers conduits de raccordement sont reliées à la chambre de mélange, étant entendu que le système de réglage (39) permet, par réglage des pompes (32), de commander le débit de concentrés provenant de différentes recharges (1).

13. Dispositif répondant à l'une des exigences 1 à 12, dans lequel le système de réglage (39) est relié à un tableau de commande, en particulier un tableau de commande composé de plusieurs touches de commande, permettant de régler au moins un des paramètres suivants : débit d'eau potable pure sans concentré mélangé, quantité correspondant à une dose, saveur de la boisson mixte et/ou dans lequel le système de réglage comprend au moins un dispositif d'ajustement permettant de régler au moins un des paramètres suivants : rapport quantitatif entre le concentré et l'eau potable dans une boisson mixte, température de la boisson mixte.

14. Système de fabrication de boissons mixtes comprenant un dispositif répondant à l'une des exigences 1 à 13 et une recharge pour la mise à disposition d'un concentré en vue de la fabrication de boissons mixtes composées d'eau potable et d'un concentré de boisson, avec un sachet (2) en un matériau plat souple, une douille (3) en saillie par rapport au sachet (2) avec une rondelle en saillie radiale (13) ou plusieurs crans en saillie radiale sur différentes positions circonférentielles à une certaine distance du sachet (2), un couvercle hermétique à l'extrémité supérieure de la douille (3), pouvant être percé (4) et un sachet (2) contenant le concentré de boisson.

15. Système répondant à l'exigence 14, dans lequel la recharge (1) comprend un filet mâle (15) placé au-dessus de la rondelle (13) ou des crans ou des moyens permettant d'enclencher, de visser ou d'emboîter un capuchon à vis (5).

16. Système répondant à l'exigence 14 ou 15, dans lequel le couvercle (4) de la recharge (1) est un opercule.

17. Système répondant à l'une des exigences 14 à 16, dans lequel la douille (3) de la recharge (1) est dotée, à proximité immédiate du sachet (2), d'une rondelle supplémentaire (14) en saillie radiale ou de plusieurs crans supplémentaires en saillie radiale sur différentes positions circonférentielles. Cette dernière rondelle ou les crans sont placés à une certaine distance de la rondelle (13) ou des différents crans, de sorte qu'il y a une fente (40) entre la rondelle (13) ou plusieurs crans en saillie radiale et la rondelle supplémentaire (14) ou plusieurs crans en saillie radiale.

18. Système répondant à l'une des exigences 14 à 17, dans lequel la recharge (1) comprend un capuchon à vis (5) avec un filet femelle vissé sur le filet mâle de la douille, ou un capuchon avec d'autres moyens d'enclenchement verrouillés avec les moyens de fermeture de la douille, ou encore un capuchon fixé par clipsage ou collage (détachable) sur la douille.
